# FASCICULE DE BREVET EUROPEEN

(11) **EP 3 186 106 B1**
(45) Date de publication et mention de la délivrance du brevet: **21.04.2021**
(21) Numéro de dépôt: 15770561.7
(22) Date de dépôt: 28.08.2015
(51) Int. Cl.: B60N 3/00, B60N 2/20, B60R 7/04

(54) **SIÈGE ESCAMOTABLE AVEC TABLETTE POUR VÉHICULE ET VÉHICULE ÉQUIPÉ DE CE SIÈGE**
UMKLAPPBARER SITZ MIT TISCH FÜR EIN FAHRZEUG UND FAHRZEUG MIT EINEM SOLCHEN SITZ
FOLDABLE SEAT WITH A TRAY FOR A VEHICLE AND VEHICLE WITH SUCH A SEAT

(30) Priorité: 29.08.2014 FR 1458140
(43) Date de publication de la demande: 05.07.2017
(73) Titulaire: PSA Automobiles SA, 78300 Poissy (FR)
(72) Inventeur: HAMTACHE, Nordine, F-42700 Firminy (FR); CARBALLIDO, Rafael, E-36206 Vigo (Pontevedra) (ES)
(86) Numéro de dépôt international: PCT/FR2015/052290
(87) Numéro de publication internationale: WO 2016/030640

(56) Documents cités:
- DE-A1- 10 057 450
- DE-A1- 19 854 985
- FR-A1- 2 911 548
- FR-A1- 2 935 322
- JP-A- 2007 112 423

## Description

La présente invention concerne un siège escamotable pour un véhicule et un véhicule équipé de ce siège escamotable.

Un siège escamotable pour véhicule comprend traditionnellement une assise et un dossier. Le dossier est mobile entre une position nominale, dans laquelle le dossier est agencé par rapport à l'assise de sorte que le siège est apte à supporter un passager assis, et une position escamotée, dans laquelle le dossier est rabattu contre l'assise.

Un passager assis sur un siège adjacent et voulant se servir de l'arrière du dossier escamoté comme support est contraint de pivoter le buste en direction du dossier escamoté. Or, cette rotation du buste est relativement inconfortable.

Il est également connu des sièges comprenant un dossier dont une face arrière supporte une tablette qui pivote autour d'un axe sensiblement horizontal pour être déployée et servir de support à un passager assis sur un siège situé derrière le siège comprenant la tablette.

Cependant, il faut que le siège soit en position nominale pour que le passager puisse utiliser cette tablette. Quand le siège est en position escamotée, le déploiement de la tablette est souvent inutile.

Un autre inconvénient est que seul un passager assis derrière un siège équipé de cette tablette peut utiliser la tablette, mais pas un passager assis sur un siège adjacent. En d'autres termes, les passagers assis sur les sièges de devant (sièges de rang 1) ne bénéficient pas d'une tablette support.

Enfin, la tablette des sièges traditionnels, même rangée, peut parfois occasioner un problème d'encombrement ou une une gêne pour les jambes d'un passager assis derrière ce type de siège.
L'état de la technique montre, par exemple des sièges escamotables avec une tablette mobile entre une position rangée et une position déployée, selon les documents FR 2 935 322 A1, DE 198 54 985 A1, JP 2007 112423 A, FR 2 911 548 A et DE 100 57 450 A1.

Aussi, la présente invention vise à pallier tout ou partie de ces inconvénients en proposant un siège escamotable offrant un support ergonomique pour un passager assis sur un siège adjacent au siège selon l'invention.

A cet effet, la présente invention a pour objet un siège escamotable pour véhicule selon la revendication 1. Le siège comprend une assise et un dossier mobile par rapport à l'assise entre une position nominale dans laquelle le dossier est agencé par rapport à l'assise pour permettre au siège de supporter un passager assis sur l'assise et une position escamotée dans laquelle le dossier est rabattu en direction de l'assise, et une tablette positionnée à l'arrière du dossier, comprenant en outre
des moyens de liaison glissière, les moyens de liaison glissière étant configurés pour guider une translation de la tablette par rapport au dossier dans un plan sensiblement horizontal quand le dossier est en position escamotée, et
des moyens de liaison pivot, les moyens de liaison pivot étant configurés pour autoriser une rotation de la tablette par rapport au dossier, autour d'un axe de rotation sensiblement vertical quand le dossier est en position escamotée, de sorte que
la tablette est mobile par rapport au dossier entre une position rangée, dans laquelle la tablette s'étend à l'arrière du dossier sans dépasser latéralement du dossier, et une position déployée, dans laquelle au moins une partie de la tablette dépasse latéralement d'un côté ou de l'autre du dossier afin de s'étendre en regard d'une assise d'un siège adjacent au siège escamotable.

Ainsi, le siège selon l'invention offre la possibilité avantageuse de positionner la tablette au plus proche d'un passager assis sur un siège adjacent au siège selon l'invention, sans que ce passager doive pivoter le buste ou s'installer en biais, ce qui permet d'améliorer sensiblement le confort de ce passager.

Selon l'invention, les moyens de liaison pivot comprennent un pivot fixe par rapport au dossier, la tablette étant reliée au pivot par les moyens de liaison glissière.

Un avantage de ces caractéristiques est s'assurer que la tablette contourne le buste du passager assis sur le siège adjacent quand la tablette est déplacée de la position rangée à la position déployée. Le déploiement de la tablette est ainsi plus ergonomique et plus efficace.

Selon un mode de réalisation préféré, les moyens de liaison pivot comprennent une pièce de support, la pièce de support présentant un alésage dans lequel s'étend le pivot de sorte que le pivot est mobile en rotation autour de l'axe de rotation par rapport à la pièce de support, la pièce de support comprenant en outre une face avant fixée au dossier et une face arrière en regard de laquelle s'étend la tablette.

Un avantage de ces caractéristiques est que la pièce de support est interposée entre le dossier et la tablette. La pièce de support, le pivot et la tablette font ainsi partie d'un même ensemble qui peut de ce fait être plus rapidement monté ou démonté du dossier.

Selon un mode de réalisation préféré, la pièce de support comprend des moyens de fixation configurés pour fixer de façon amovible la pièce de support au dossier.

Cette caractéristique offre une grande modularité, puisque la tablette peut être retirée ou reliée au dossier au gré des besoins de l'utilisateur, par exemple pour dégager plus de place à l'arrière du dossier.

Préférentiellement, les moyens de fixation comprennent au moins deux crochets configurés pour suspendre la pièce de support au dossier.

Ainsi, la tablette est rattachée ou détachée du dossier de façon simple et rapide. Il suffit en effet d'accrocher la pièce de support à une armature du dossier, celle-ci pouvant rester en place du fait des crochets et de la pesanteur, sans nécessairement prévoir une autre opération.

Selon un mode de réalisation préféré, la pièce de support comprend un bord inférieur et un bord supérieur, et l'alésage et le pivot sont positionnés plus proches du bord supérieur que du bord inférieur.

Un avantage de cette caractéristique est de maximiser la surface de support disponible pour le passager assis sur un siège adjacent sans que ce passager ait à pivoter le buste ou s'installer en biais. En effet, la rotation de la tablette par rapport au dossier s'effectue en partie haute du dossier. Cela permet à la tablette de s'étendre le plus possible selon une direction transversale du siège, c'est-à-dire le plus possible devant le passager assis sur le siège adjacent.

Selon un mode de réalisation préféré, le siège comprend des premiers moyens de blocage, les premiers moyens de blocage étant configurés pour maintenir le pivot immobile par rapport au dossier quand la tablette est dans la position déployée, et des deuxièmes moyens de blocage, les deuxièmes moyens de blocage étant configurés pour maintenir la tablette immobile par rapport au pivot quand la tablette est dans la position déployée.

Un avantage de ces caractéristiques est de stabiliser la tablette en position déployée. Cela permet d'éviter que l'utilisateur déplace involontairement la tablette, au risque de renverser le ou les objets que la tablette supporte. En effet, la tablette en position déployée est destinée à s'étendre juste au-dessus des jambes du passager assis sur le siège adjacent.

Selon l'invention, le siège comprend des moyens de butée, les moyens de butée étant configurés pour bloquer la translation de la tablette par rapport au pivot selon un sens de translation
prédéterminé quand la tablette est dans la position rangée et pour bloquer toute rotation de la tablette par rapport au dossier quand la tablette est dans la position rangée.

Cette caractéristique a l'avantage d'immobiliser la tablette quand le dossier est en position nominale, mais d'autoriser un degré de liberté de la tablette, à savoir une translation vers l'avant, quand le dossier est en position escamotée. Ainsi, le rangement de la tablette est plus sécurisé et le déploiement de la tablette est plus rapide.

Selon un mode de réalisation préféré, le siège comprend des moyens de pré-positionnement, les moyens de pré-positionnement étant configurés pour immobiliser le pivot par rapport au dossier dans une position dans laquelle la tablette est apte à être déplacée jusqu'à la position rangée uniquement par translation par rapport au pivot.

Cette caractéristique offre l'avantage de réduire la durée de rangement de la tablette, puisque le pré-positionnement évite un repliement de la tablette « à tâtons », c'est-à-dire en plusieurs tentatives. Cela améliore l'ergonomie d'utilisation.

Selon un mode de réalisation préféré, la pièce de support comprend au moins un logement, ledit au moins un logement délimitant une ouverture destinée à être obturée par la tablette quand la tablette est position rangée et destinée à être libre d'accès quand la tablette est en position déployée.

Un avantage de ces caractéristiques est de permettre le stockage d'objets dans le logement y compris quand le dossier est en position nominale puisque la tablette forme un couvercle fermant ce logement.

Préférentiellement, le pivot comprend une première pièce de rotation, une deuxième pièce de rotation, la pièce de support étant interposée entre la première pièce de rotation et la deuxième pièce de rotation, et des moyens d'assemblage, les moyens d'assemblage étant configurés pour permettre l'assemblage de la première pièce de rotation et de la deuxième pièce de rotation par translation puis rotation relative de la première pièce de rotation et de la deuxième pièce de rotation.

Un avantage de ces caractéristiques est un montage rapide du pivot sur la pièce de support. Ce gain de temps permet de réduire les coûts de fabrication.

Selon un autre aspect, la présente invention concerne aussi un véhicule, notamment un véhicule automobile, comprenant un siège escamotable ayant les caractéristiques précitées.

Un avantage de ce véhicule est d'offrir un support à un passager assis sur un siège adjacent au siège comprenant la tablette, sans que ce passager ait à pivoter le buste pour se servir de la tablette.

Préférentiellement, le véhicule comprend trois sièges de rang 1, dont le siège escamotable ayant les caractéristiques précitées, et le siège escamotable ayant les caractéristiques précitées est positionné entre les deux autres sièges de rang 1.

Préférentiellement, le véhicule est un véhicule utilitaire.

D'autres caractéristiques et avantages de la présente invention ressortiront clairement de la description détaillée ci-après d'un mode de réalisation, donné à titre d'exemple non limitatif, en référence aux dessins annexés dans lesquels :
- Les figures 1 et 2 sont des vues schématiques et de côté d'un siège selon un mode de réalisation de l'invention, en position nominale et en position escamotée,
- Les figures 3 à 5 sont des vues schématiques et de dessus du siège selon un mode de réalisation de l'invention, ce siège étant en position escamotée et la tablette respectivement en position rangée, intermédiaire et déployée,
- Les figures 6 à 9 sont des vues de dessus de l'intérieur d'un véhicule équipé d'un siège selon un mode de réalisation de l'invention, le siège étant en position escamotée et la tablette étant respectivement en position rangée, intermédiaire, déployée à gauche et déployée à droite,
- La figure 10 est une vue en perspective éclatée d'une partie d'un siège selon un mode de réalisation de l'invention,
   La figure 11 est une vue en perspective et de dessous d'une partie d'un siège selon un mode de réalisation de l'invention,
- La figure 12 est une vue en perspective et de dessous d'une tablette d'un siège selon un mode de réalisation de l'invention,
- Les figures 13 et 14 sont des vues de dessus d'un axe de rotation d'un siège selon un mode de réalisation de l'invention,
- La figure 15 est une vue de dessus et en perspective d'une pièce de support d'un siège selon un mode de réalisation de l'invention,
- La figure 16 est une vue de dessus et en perspective d'une pièce de support et d'un axe de rotation d'un siège selon un mode de réalisation de l'invention,
- La figure 17 est une vue de dessous et en perspective d'une pièce de support et d'un axe de rotation d'un siège selon un mode de réalisation de l'invention.

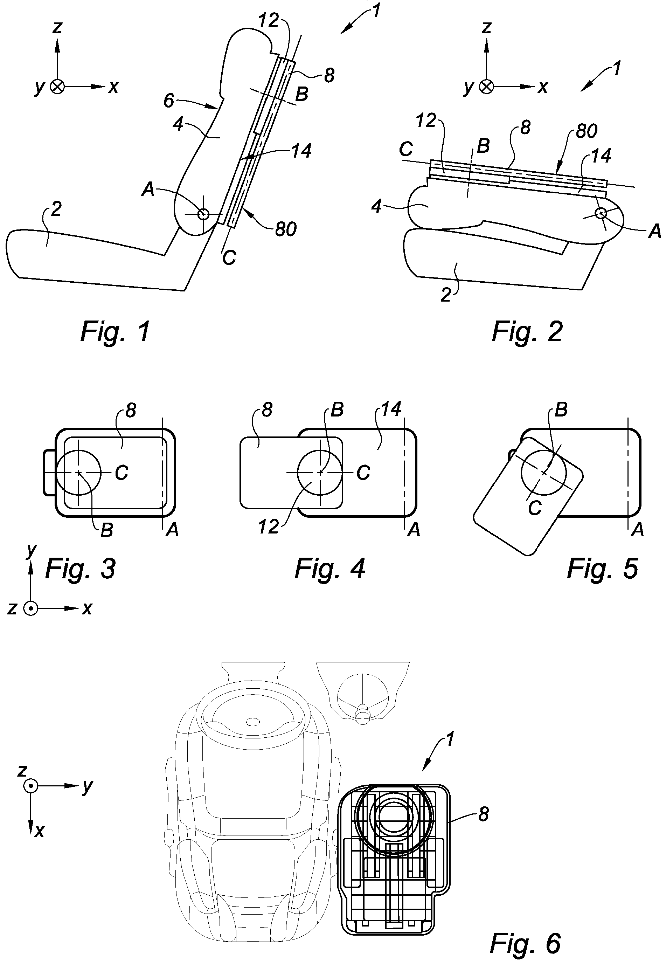

La figure 1 montre un siège 1 escamotable selon un mode de réalisation de l'invention. Le siège 1 est destiné à équiper un véhicule automobile.

On notera que par siège on entend siège destiné à recevoir un ou plusieurs passagers. Dans le cas où le siège 1 est destiné à recevoir plusieurs passagers, le siège 1 peut aussi être appelé banquette.

On précise aussi que la description est réalisée par rapport à un référentiel cartésien lié au siège 1, l'axe X étant orienté dans la direction longitudinale du siège 1, l'axe Y étant orienté dans la direction transversale du siège 1, et l'axe Z étant orienté dans la direction verticale du siège 1. Ainsi, les orientations, directions et déplacements longitudinaux, transversaux, verticaux, avant ou arrière, haut ou bas, sont définis par rapport à ce référentiel.

Le siège 1 comprend une assise 2 et un dossier 4, mobiles l'un par rapport à l'autre entre une position nominale (figure 1), dans laquelle l'assise 2 et le dossier 4 sont configurés pour supporter un passager assis sur l'assise 2, et une position escamotée (figure 2), dans laquelle une face avant 6 du dossier 4 est rabattue en regard de l'assise 2.

Plus particulièrement, le dossier 4 et l'assise 2 peuvent être sensiblement orthogonaux en position nominale et sensiblement parallèles en position escamotée.

A cette fin, le siège 1 peut comprendre des moyens de liaison pivot reliant l'assise 2 et le dossier 4, connus de l'homme du métier, de sorte que le dossier 4 est mobile en rotation par rapport à l'assise 2 autour d'un axe A de rotation sensiblement transversal, c'est-à-dire sensiblement parallèle à la direction tansversale Y du siège 1.

Le dossier 4 comprend une partie arrière, opposée à la face 6 avant destinée à supporter le dos d'un passager assis sur le siège 1, et une tablette 8 qui est reliée à la partie arrière du dossier 4.

La tablette 8 est destinée à servir de support à un passager ou un objet. A titre d'exemples, la tablette 8 peut servir de support pour écrire, utiliser un ordinateur ou se restaurer.

A cet effet, la tablette 8 comprend une face 80 supérieure sensiblement plane adaptée pour supporter de façon stable un objet posé sur la tablette 8.

Comme cela est visible sur la figure 2, la tablette 8 est en outre configurée pour s'étendre dans un plan sensiblement horizontal quand le dossier 4 est en position escamotée.

Le siège 1 comprend par ailleurs des moyens de liaison glissière configurés pour guider une translation de la tablette 8 par rapport au dossier 4, dans un plan sensiblement parallèle à la partie arrière du dossier 4 quand le dossier 4 est position escamotée.

On notera que cette translation peut être sensiblement rectiligne ou curviligne. Cette translation a une composante selon l'axe X longitudinal du siège 1 (dossier 4 en position escamotée). Plus particulièrement, comme illustré sur les figures, la translation de la tablette 8 par rapport au dossier 4 en position escamotée s'effectue selon un axe C sensiblement parallèle à l'axe X longitudinal.

Le siège 1 comprend aussi des moyens de liaison pivot configurés pour permettre une rotation de la tablette 8 par rapport au dossier 4, autour d'un axe B de rotation sensiblement perpendiculaire à la partie arrière du dossier 4. En position escamotée du siège 1, la tablette 8 est mobile en rotation autour d'un axe B de rotation sensiblement parallèle à l'axe Z vertical du siège 1.

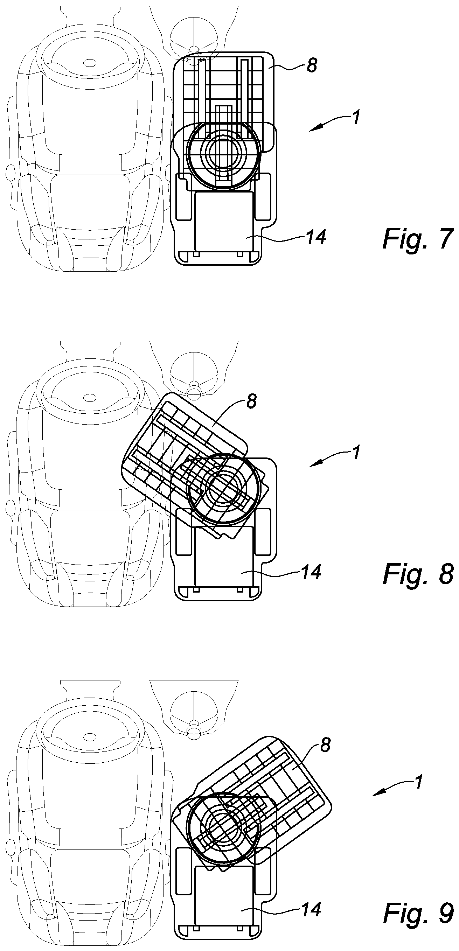

Ainsi, la tablette 8 est mobile par rapport au dossier 4 entre une position rangée (figures 3 et 6), dans laquelle la tablette 8 s'étend à l'arrière du dossier 4 sans en dépasser, une position intermédiaire (figures 4 et 7), dans laquelle la tablette 8 dépasse à l'avant du dossier 4 après avoir été translatée au maximum vers l'avant, et une position finale déployée dans laquelle la tablette 8 s'étend latéralement en dépassant d'un premier côté (figures 5 et 8) ou d'un deuxième côté (figure 9) du dossier 4 de manière à s'étendre au-dessus d'un siège adjacent au siège 1 selon l'invention. On notera qu'en position déployée, la tablette 8 est destinée à s'étendre au-dessus des cuisses d'un passager assis sur un siège adjacent au siège 1 selon l'invention.

Ainsi, pour passer de la position rangée à la position déployée, le mouvement de la tablette 8 est une combinaison, simultanée ou non, d'une translation uni ou bi-directionnelle et d'une rotation.

Ce mouvement est effectué dans un plan sensiblement parallèle à la partie arrière du dossier 4.

La tablette 8 peut ainsi être positionnée au plus près d'un passager assis sur un siège adjacent au siège 1 selon l'invention, sans que ce passager ait à pivoter le buste ou s'installer en biais.

L'axe B de rotation de la tablette 8 est fixe par rapport au dossier 4, c'est-à-dire que la position de cet axe B de rotation est invariante par rapport au dossier 4.

Selon le mode de réalisation représenté sur les figures, les moyens de liaison pivot comprennent un pivot 12.

Le pivot 12 matérialise l'axe B de rotation. Le pivot 12 est donc fixe par rapport au dossier 4, en ce sens que sa position est invariante par rapport au dossier 4.

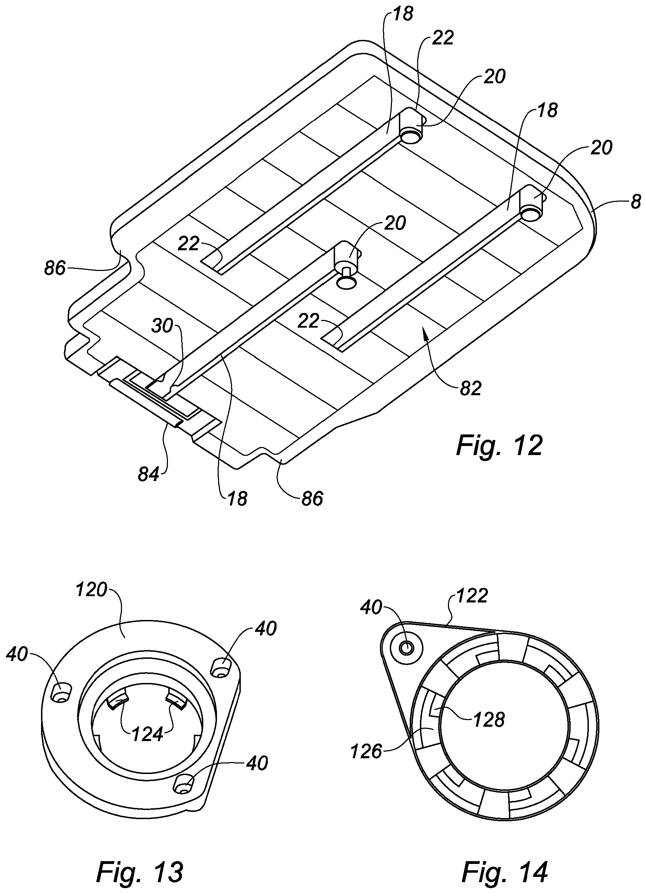

Le pivot 12 peut être formé d'une première pièce 120 de rotation et d'une deuxième pièce 122 de rotation assemblées l'une à l'autre par des moyens d'assemblage, plus particulièrement visibles sur les figures 13 et 14.

Les moyens d'assemblage comprennent avantageusement des crochets 124, ménagés sur la première ou deuxième pièce 120, 122 de rotation, et des ouvertures 126 complémentaires ménagées sur l'autre pièce de rotation parmi la première et la deuxième pièce 120, 122 de rotation. A l'intérieur des ouvertures 126 est prévue une butée 128, de sorte que chaque ouverture présente une portion large et une portion étroite. L'assemblage des pièces 120, 122 est réalisé par translation l'une vers l'autre des deux pièces 120, 122 de rotation de sorte que chaque crochet 124 s'insère dans une portion large de l'une des ouvertures 126, puis rotation relative des deux pièces de rotation 120,122 de sorte que chaque crochet 124 passe de la portion large à la portion étroite de l'ouverture 126, où ce crochet 124 vient en appui contre la butée 128 qui empêche alors la désolidarisation, par translation inverse, des deux pièces 120, 122 de rotation.

Les moyens de liaison pivot comprennent aussi une pièce 14 de support, dans laquelle est ménagé un alésage 140. L'alésage 140 est destiné à recevoir le pivot 12, si bien que le pivot 12 est mobile en rotation autour de l'axe B de rotation par rapport à la pièce 14 de support.

La deuxième pièce 122 de rotation est agencée sur une face 142 avant de la pièce 14 de support et la première pièce 120 de rotation est agencée sur une face 144 arrière de la pièce 14 de support.

La face 142 avant de la pièce 14 de support est par ailleurs fixée à l'arrière du dossier 4, de sorte que la pièce 14 est interposée entre la tablette 8 et le dossier 4.

Ainsi, la pièce 14 de support, le pivot 12 et la tablette 8 forment un ensemble de tablette qui peut être monté ou démonté d'un bloc au dossier 4.

On notera que l'alésage 140 est agencé plus proche d'un bord 146 supérieur de la pièce 14 de support que d'un bord 148 inférieur de la pièce 14 de support, si bien que le pivot 12 et l'axe B de rotation de la tablette 8 sont situés à l'avant du dossier 4 quand le dossier 4 est en position escamotée.

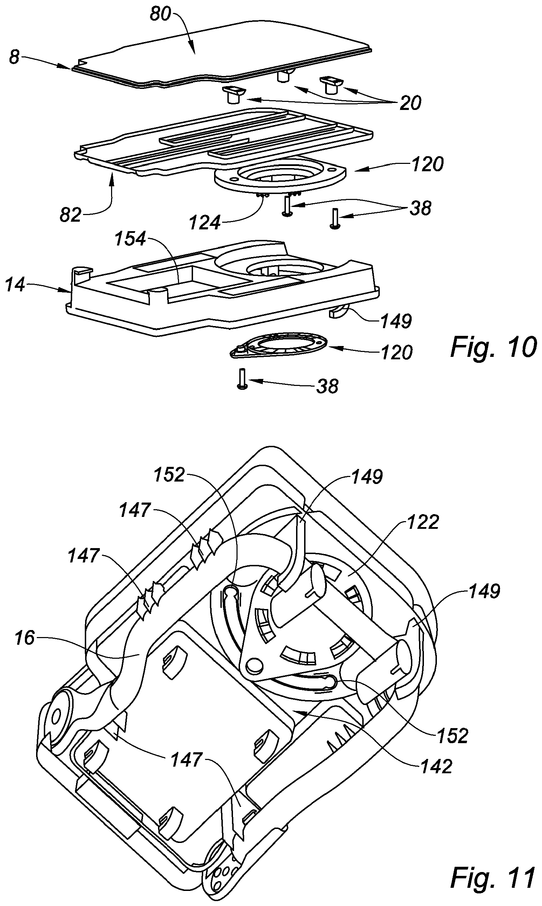

Comme illustré notamment sur la figure 11, la pièce 14 de support peut comprendre des moyens de fixation configurés pour fixer de façon amovible la pièce 14 de support au dossier 4. Les moyens de fixation comprennent avantageusement des crochets 149 permettant de suspendre la pièce 14 de support à une armature 16 du dossier 4.

Des butées 147 peuvent être prévues pour prévenir tout déplacement latéral de la pièce 14 de butée par rapport à l'armature 16. La pièce 14 peut ensuite rester en place sur l'armature 16 sous l'effet de la gravité ou bien via des moyens additionnels de fixation connus de l'homme du métier.

La tablette 8 est reliée au pivot 12 par les moyens de liaison glissière, de sorte que la tablette 8 est mobile en translation par rapport au pivot 12 et solidaire du pivot 12 en rotation autour de l'axe B.

Les moyens de liaison glissière comprennent ici des rainures 18, par exemple trois, et des pions 20 destinés à coulisser dans ces rainures 18. Les rainures 18 sont ici ménagées sur une face 82 inférieure de la tablette 8. Les rainures 18 peuvent être rectilignes, ou éventuellement curvilignes. Les rainures 18 peuvent être du type en forme de T pour maintenir les pions 20, par exemple également en forme de T, à l'intérieur des rainures 18.

Comme illustré sur la figure 10, la tablette 8 peut être formée par deux pièces assemblées l'une à l'autre, et conformées pour délimiter entre elles les rainures 18. Une partie supérieure des pions 20 est interposée et bloquée entre ces deux pièces assemblées, tandis qu'une partie inférieure des pions 20 est fixée au pivot 12 par des éléments 38 de fixation, comme des vis, insérés dans des alésages 40 du pivot 12, visibles sur les figures 13 et 14.

Selon l'exemple de réalisation représenté sur les figures, les pions 20 sont solidaires du pivot 12, notamment de la première pièce 120 de rotation, si bien que la tablette 8 et le pivot 12 sont solidaires en rotation autour de l'axe B de rotation. L'un des pions 20 relie la première et la deuxième pièce 120, 122 de rotation, solidarisant ainsi en rotation la première et la deuxième pièce 120, 122 de rotation.

Les rainures 18 présentent à leurs extrémités une butée 22 pour arrêter la course des pions 20. Ces butées 22 déterminent les positions extrêmes de la tablette 8 par rapport au pivot 12 quand la tablette 8 est translatée relativement au pivot 12.

En particulier, une des butées 22 peut être située à proximité d'un bord 84 inférieur de la tablette 8, de sorte qu'en position intermédiaire (figures 4 et 8) la tablette 8 est projetée au maximum vers l'avant du dossier 4. Ainsi, la rotation de la tablette 8 autour de l'axe B de rotation s'effectue essentiellement en partie inférieure de la tablette 8.

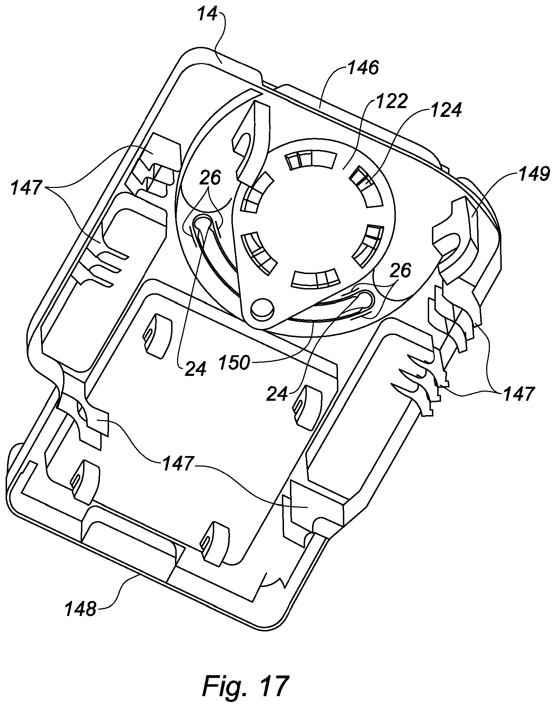

Comme cela est visible sur les figures 11, 15 et 17, la pièce 14 de support peut comprendre une lumière 150, sensiblement en forme d'arc-de-cercle. La lumière 150 entoure au moins en partie l'alésage 140. Cette lumière 150 peut s'étendre de part et d'autre de l'axe C de translation et être sensiblement symétrique par rapport à cet axe C. La lumière 150 comprend deux extrémités 152 formant des butées déterminant les positions extrêmes de rotation du pivot 12 par rapport à la pièce 14 de support. Un des pions 20 est inséré dans la lumière 150, à l'intérieur de laquelle ce pion 20 est destiné à coulisser.

Le siège 1 peut comprendre des premiers moyens de blocage conçus pour maintenir le pivot 12 dans une position stable par rapport à la pièce 14 de support quand la tablette 8 est en position déployée à gauche et/ou à droite.

Comme illustré sur les figures 11, 15 et 17, ces premiers moyens de blocage comprennent par exemple un ou plusieurs ergots 24 faisant saillie à l'intérieur de la lumière 150, à proximité d'une extrémité de cette lumière 150, de manière à maintenir le pion 20 bloqué contre cette extrémité. Une fente 26 peut être ménagée derrière chaque ergot 24, de façon sensiblement parallèle à la lumière 150, pour délimiter, entre cette fente 26 et la lumière 150, une tige élastiquement déformable depuis laquelle l'ergot 24 fait saillie. Lorsqu'un utilisateur exerce une force supérieure à une valeur seuil prédéterminée, le pion 20 fait fléchir la tige élastiquement déformable, si bien que l'ergot 24 s'efface pour laisser passer le pion 20.

Le siège 1 peut aussi comprendre des deuxièmes moyens de blocage conçus pour maintenir la tablette 8 immobile par rapport au pivot 12 quand la tablette 8 est dans la position déployée.

Comme visible sur la figure 12, ces deuxièmes moyens de blocage peuvent comprendre un ergot 30 faisant saillie à l'intérieur de l'une des rainures 18, à proximité de l'extrémité de la rainure 18 qui est la plus proche du bord 84 inférieur de la tablette 8, de manière à délimiter, entre cette extrémité et l'ergot 30, un espace correspondant aux dimensions du pion 20 inséré dans cette rainure 18. Ainsi, l'ergot 30 empêche le pion 20 de quitter cette extrémité de la rainure 18, à moins que l'utilisateur exerce sur la tablette 8 une force supérieure à une valeur seuil prédéterminée.

Par ailleurs, le siège 1 comprend des moyens de butée conçus pour bloquer un unique sens de translation de la tablette 8 par rapport au pivot 12 et toute rotation de la tablette 8 par rapport au dossier 4 quand la tablette 8 est dans la position rangée.

Comme représenté sur les figures 10, 15 et 16, ces moyens de butée comprennent par exemple deux pattes 32, qui s'étendent ici en saillie depuis la face 144 arrière de la pièce 14 de support. La tablette 8 comprend deux épaulements 86, visibles sur la figure 12. Les pattes 32 sont destinées à venir contre ces épaulements 86 quand la tablette 8 est en position rangée. Les pattes 32 présentent une première face 320 de butée qui bloque une rotation de la tablette 8 par rapport au dossier 4 autour de l'axe B de rotation quand la tablette 8 est en position rangée. Les premières faces 320 de butée se font face, si bien que toute rotation de la tablette 8 par rapport au dossier 4 autour de l'axe B de rotation est bloquée quand la tablette 8 est en position rangée. Les pattes 32 comprennent une deuxième face 322 de butée, qui peut être sensiblement perpendiculaire à la première face 320 de butée, cette deuxième face 322 de butée bloquant toute translation vers l'arrière de la tablette 8 par rapport au pivot 12. En particulier, quand la tablette 8 est en position rangée et que le dossier 4 est en position nominale, la tablette 8 est soutenue par ces deuxièmes faces 322 de butée qui exercent sur la tablette 8 une force de réaction s'opposant au poids de la tablette 8.

Pour faciliter un retour de la tablette 8 en position rangée, le siège 1 peut comprendre des moyens de pré-positionnement conçus pour bloquer la rotation de la tablette 8 par rapport au dossier 4 dans une position intermédiaire dans laquelle il suffit de translater la tablette 8 par rapport au pivot 12 pour placer la tablette 8 dans la position rangée. Cela est particulièrement avantageux quand le siège 1 comprend les moyens de butée décrits ci-dessus puisque cela permet de placer la tablette 8 dans une position dans laquelle la tablette 8 est apte à engager sans faille les moyens de butée, c'est-à-dire une position à partir de laquelle la tablette 8 parvient nécessairement en position rangée par simple translation par rapport au pivot 12. Cela est aussi avantageux quand la tablette 8 peut être déployée à droite ou à gauche du siège 1, car cela permet à l'utilisateur de retrouver aisément la position intermédiaire visible sur les figures 4 et 7, c'est-à-dire ici une position intermédiaire sensiblement à mi-chemin entre la position déployée à gauche (figure 8) et la position déployée à droite (figure 9).

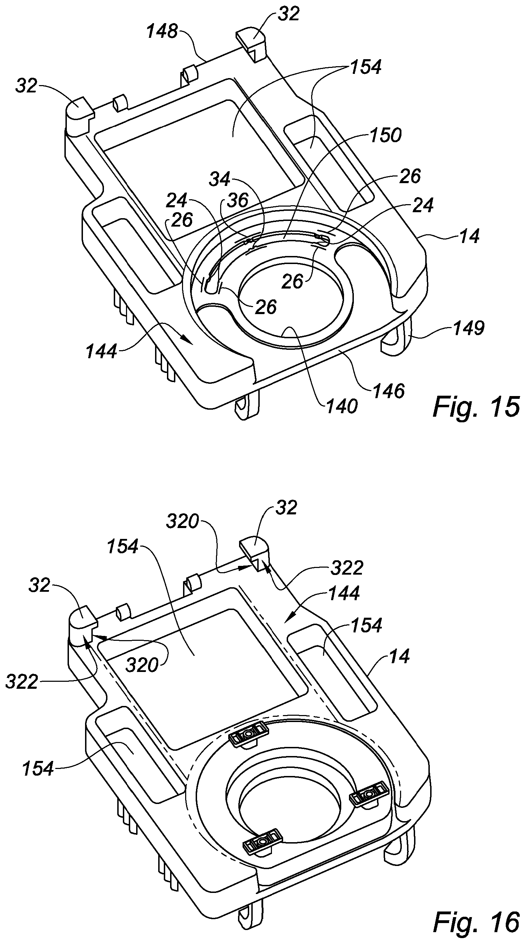

Selon l'exemple de réalisation de la figure 15, ces moyens de pré-positionnement comprennent, de façon similaire aux premiers moyens de blocage précédemment décrits, une ou plusieurs paires d'ergots 34 faisant saillie à l'intérieur de la lumière 150, mais cette fois-ci au niveau d'une portion intermédiaire de cette lumière 150, par exemple sensiblement au milieu de la lumière 150. Chaque paire d'ergots 34 délimite un espace adapté pour recevoir le pion 20 mobile dans la lumière 150, quand la tablette 8 atteint la position intermédiaire assurant son pré-positionnement. Les ergots 34 bloquent le pion 20 dans cet espace, à moins que l'utilisateur n'exerce une force supérieure à une valeur seuil prédéterminée permettant au pion 20 de quitter cet espace. Une fente 36 peut être ménagée derrière chaque paire d'ergots 34, cette fente 36 s'étendant de façon sensiblement parallèle à la lumière 150, pour délimiter, entre cette fente 36 et la lumière 150, une tige élastiquement déformable depuis laquelle les ergots 34 font saillie.

Comme illustré sur les figures 10, 15 et 16, la pièce 14 de support peut comprendre un ou plusieurs logements 154 délimitant une ouverture accessible depuis la face 144 arrière de la pièce 14 de support. Ces logements 154 sont destinés à recevoir un objet quand la tablette 8 est en position déployée et le dossier 4 est en position escamotée. La tablette 8 est destinée à recouvrir ces logement 154 en obturant leur ouverture quand la tablette 8 est placée en position rangée. Ainsi, des objets peuvent rester stockés dans ces logements 154, y compris quand le dossier 4 est déplacé en position nominale.

Selon un autre aspect, la présente invention concerne aussi un véhicule, notamment un véhicule automobile, comprenant le siège 1 escamotable décrit ci-dessus. Préférentiellement, ce véhicule comprend trois sièges de rang 1, dont le siège 1 escamotable, qui est avantageusement positionné entre les deux autres sièges de rang 1, de sorte que la tablette 8 du siège 1 peut être déployée au-dessus de l'assise de l'un ou l'autre des deux sièges entre lesquels est placé le siège 1 (figures 8 et 9). En particulier, le véhicule peut être un véhicule utilitaire.

Bien entendu, l'invention n'est nullement limitée au mode de réalisation décrit ci-dessus, ce mode de réalisation n'ayant été donné qu'à titre d'exemple. Des modifications restent possibles, notamment du point de vue de la constitution des divers éléments ou par la substitution d'équivalents techniques, sans sortir pour autant du domaine de protection défini par les revendications suivantes.

## Revendications

1. Siège (1) escamotable pour véhicule, le siège (1) comprenant une assise (2) et un dossier (4) mobile par rapport à l'assise (2) entre une position nominale dans laquelle le dossier (4) est agencé par rapport à l'assise (2) pour permettre au siège (1) de supporter un passager assis sur l'assise (2) et une position escamotée dans laquelle le dossier (4) est rabattu en direction de l'assise (2), et une tablette (8) positionnée à l'arrière du dossier (4), comprenant en outre
des moyens de liaison glissière, les moyens de liaison glissière étant configurés pour guider une translation de la tablette (8) par rapport au dossier (4) dans un plan sensiblement horizontal quand le dossier (4) est en position escamotée, et
des moyens de liaison pivot, les moyens de liaison pivot étant configurés pour autoriser une rotation de la tablette (8) par rapport au dossier (4), autour d'un axe (B) de rotation sensiblement vertical quand le dossier (4) est en position escamotée, de sorte que
la tablette (8) est mobile par rapport au dossier (4) entre une position rangée, dans laquelle la tablette (8) s'étend à l'arrière du dossier (4) sans dépasser latéralement du dossier (4), et une position déployée, dans laquelle au moins une partie de la tablette (8) dépasse latéralement d'un côté ou de l'autre du dossier (4) afin de s'étendre en regard d'une assise d'un siège adjacent au siège (1) escamotable,
**caractérisé en ce que** les moyens de liaison pivot comprennent un pivot (12) fixe par rapport au dossier (4), la tablette (8) étant reliée au pivot (12) par les moyens de liaison glissière,
et le siège (1) comprend des moyens de butée (32, 86), les moyens de butée étant configurés pour bloquer la translation de la tablette (8) par rapport au pivot (12) selon un sens de translation prédéterminé quand la tablette (8) est dans la position rangée et pour bloquer toute rotation de la tablette (8) par rapport au dossier (4) quand la tablette (8) est dans la position rangée.

2. Siège (1) selon la revendication 1, dans lequel les moyens de liaison pivot comprennent une pièce (14) de support, la pièce (14) de support présentant un alésage (140) dans lequel s'étend le pivot (12) de sorte que le pivot (12) est mobile en rotation autour de l'axe (B) de rotation par rapport à la pièce (14) de support, la pièce (14) de support comprenant en outre une face (142) avant fixée au dossier (4) et une face (144) arrière en regard de laquelle s'étend la tablette (8).

3. Siège (1) selon la revendication 2, dans lequel la pièce (14) de support comprend des moyens de fixation configurés pour fixer de façon amovible la pièce (14) de support au dossier (4).

4. Siège (1) selon la revendication 2 ou 3, dans lequel la pièce (14) de support comprend un bord (148) inférieur et un bord (146) supérieur, et l'alésage (140) et le pivot (12) sont positionnés plus proches du bord (146) supérieur que du bord (148) inférieur.

5. Siège (1) selon l'une des revendications 1 à 4, dans lequel le siège (1) comprend des premiers moyens de blocage (24), les premiers moyens de blocage étant configurés pour maintenir le pivot (12) immobile par rapport au dossier (4) quand la tablette (8) est dans la position déployée, et des deuxièmes moyens de blocage (30), les deuxièmes moyens de blocage étant configurés pour maintenir la tablette (8) immobile par rapport au pivot (12) quand la tablette (8) est dans la position déployée.

6. Siège (1) selon l'une des revendications 1 à 5, dans lequel le siège (1) comprend des moyens de pré-positionnement (34), les moyens de pré-positionnement étant configurés pour immobiliser le pivot (12) par rapport au dossier (4) dans une position dans laquelle la tablette (8) est apte à être déplacée jusqu'à la position rangée uniquement par translation par rapport au pivot (12).

7. Siège (1) selon l'une des revendications 1 à 6, dans lequel la pièce (14) de support comprend au moins un logement (154), ledit au moins un logement (154) délimitant une ouverture destinée à être obturée par la tablette (8) quand la tablette (8) est position rangée et destinée à être libre d'accès quand la tablette (8) est en position déployée.

8. Véhicule, notamment un véhicule automobile, comprenant un siège (1) escamotable selon l'une des revendications 1 à 7.

## Patentansprüche

1. Versenkbarer Fahrzeugsitz (1), wobei der Sitz (1) eine Sitzfläche (2) und eine relativ zur Sitzfläche (2) bewegliche Rückenlehne (4) zwischen einer Nennstellung, in der die Rückenlehne (4) relativ zur Sitzfläche (2) angeordnet ist, um dem Sitz (1) zu ermöglichen, einen auf der Sitzfläche (2) sitzenden Fahrgast zu tragen, und einer versenkten Stellung aufweist, in der die in Richtung umgebogen wird der Sitzfläche (2) und einer Tafel (8), die hinter der Rückenlehne (4) angeordnet ist, ferner mit
Gleitverbindungsmittel, wobei die Gleitverbindungsmittel so ausgebildet sind, dass sie eine Verschiebung des Tabletts (8) relativ zur Rückenlehne (4) in einer im Wesentlichen horizontalen Ebene führen, wenn sich die Rückenlehne (4) in einer eingefahrenen Position befindet, und
Schwenkverbindungsmittel, wobei die Schwenkverbindungsmittel so ausgebildet sind, dass sie eine Drehung des Tabletts (8) relativ zur Rückenlehne (4) um eine im Wesentlichen vertikale Drehachse (B) bei eingezogener Rückenlehne gestatten, sodass
Das Tablett (8) ist in Bezug auf die Rückenlehne (4) zwischen einer Reihenstellung, in der sich das Tablett (8) hinter der Rückenlehne (4) erstreckt, ohne seitlich von der Rückenlehne (4) zu überstehen, und einer Entfaltungsstellung bewegbar, in der mindestens ein Teil des Tabletts (8) seitlich über eine Seite der Rückenlehne (4) vorsteht, um sich einer Sitzfläche benachbart zu erstrecken zu können (1) 1. versenkbar,
Die Schwenkverbindungsmittel umfassen einen Drehzapfen (12), der in Bezug auf die Rückenlehne (4) feststeht, wobei die Tafel (8) mit dem Drehzapfen (12) über die Gleitverbindungsmittel verbunden ist.
Der Sitz (1) umfasst Anschlagmittel (32, 86), wobei die Anschlagmittel so ausgebildet sind, dass sie die Translation des Tabletts (8) relativ zum Drehpunkt (12) in einer vorbestimmten Translationsrichtung blockieren, wenn sich das Tablett (8) in der Reihenstellung befindet, und jede Drehung des Tabletts (8) relativ zur Rückenlehne (4) blockieren, wenn sich das Tablett (8) in der Reihenstellung befindet

2. Sitz (1) nach Anspruch 1, bei dem die Schwenkverbindungsmittel ein Stützteil (14) umfassen, wobei das Stützteil (14) eine Bohrung (140) aufweist, in der sich der Drehzapfen (12) erstreckt, sodass der Drehzapfen (12) um die Drehachse (B) relativ zu dem Stützteil (14) drehbar ist, das Teil (1) 14), die ferner eine vordere Fläche (142) aufweist, die an der Rückenlehne (4) befestigt ist, und eine hintere Fläche (144), zu der sich die Tafel (8) erstreckt.

3. Sitz (1) nach Anspruch 2, bei dem das Stützteil (14) Befestigungsmittel aufweist, die ausgebildet sind, um das Stützteil (14) lösbar an der Rückenlehne (4) zu befestigen.

4. Sitz (1) nach Anspruch 2 oder 3, wobei das Stützteil (14) einen unteren Rand (148) und einen oberen Rand (146) aufweist und die Bohrung (140) und der Drehzapfen (12) näher an dem oberen Rand (146) als an dem unteren Rand (148) positioniert sind.

5. Sitz (1) nach einem der Ansprüche 1 bis 4, wobei der Sitz (1) erste Verriegelungsmittel (24) aufweist, wobei die ersten Verriegelungsmittel so konfiguriert sind, dass sie den Drehpunkt (12) relativ zur Rückenlehne (4) unbeweglich halten, wenn sich die Tafel (8) in der ausgefahrenen Position befindet, und zweite Verriegelungsmittel (30) so konfiguriert sind, dass sie die Tafel (8) halten in Bezug auf den Drehpunkt (12) unbeweglich, wenn sich das Tablett (8) in der ausgefahrenen Position befindet.

6. Sitz (1) nach einem der Ansprüche 1 bis 5, bei dem der Sitz (1) Vorpositioniermittel (34) aufweist, wobei die Vorpositioniermittel so konfiguriert sind, dass sie den Drehpunkt (12) relativ zur Rückenlehne (4) in einer Position fixieren, in der die Tafel (8) nur in Bezug auf den Drehpunkt (12) in die Reihenposition bewegbar ist.

7. Sitz (1) nach einem der Ansprüche 1 bis 6, bei dem das Stützteil (14) mindestens ein Gehäuse (154) umfasst, wobei das mindestens eine Gehäuse (154) eine Öffnung zum Verschließen durch das Tablett (8) begrenzt, wenn sich das Tablett (8) in einer geraden Position befindet und frei von Zugang sein soll, wenn sich das Tablett (8) in einer ausgefahrbaren Position befindet.

8. Fahrzeug, insbesondere ein Kraftfahrzeug, mit einem einziehbaren Sitz (1) nach einem der Ansprüche 1 bis 7.

## Claims

1. Seat (1) retractable for a vehicle means the seat (1) comprising a seat (2) and a seat back (4) moving in relation to the seat (2) between a nominal position in which the seat back (4) is arranged in relation to the seat (2) to allow the seat (1) to support a passenger seated on the seat (2) and a retractable position in which the seat back (4) is folded in direction of the seat (2), and a tablet (8) positioned at the back of the seat back (4), which also includes
means of sliding connection, means of sliding connection being configured to guide a translation of the tablet (8) in relation to the folder (4) in a substantially horizontal plane when the folder (4) is in a dislocated position, and
means of pivot connection, the means of pivot connection being configured to allow a rotation of the tablet (8) in relation to the folder (4), around an axis (B) of substantially vertical rotation when the folder (4) is in a position of distraction, so that
the tablet (8) is moving in relation to the back (4) between a row position, in which the tablet (8) extends to the back of the back of the folder (4) without extending laterally beyond the back of the back (4), and a deployed position, in which at least one part of the tablet (8) extends laterally on either side of the back (4) to extend in relation to a seat of the tablet. a seat adjacent to the seat (1), removable,
characterized that the pivot means include a fixed pivot (12) in relation to the back (4), the tablet (8) being connected to the pivot (12) by the sliding means,
and the seat (1) includes means of stop (32.86), the means of stop being configured to block the translation of the tablet (8) from the pivot (12) according to a predetermined direction of translation when the tablet (8) is in the row position and to block any rotation of the tablet (8) from the back (4) when the tablet (8) is in the row position

2. Seat (1) According to Claim 1, in which the pivot means include a supporting part (14), the supporting part (14) having a boring (140) in which the pivot extends (12) so that the pivot (12) is rotating around the axis (B) of rotation in relation to the supporting part (14), the supporting part (12) 4) support, including one front (142) fixed to the back (4) and one back (144) facing which the tablet extends (8).

3. Seat (1) in accordance with Claim 2, in which part (14) of support includes fasteners configured to remotely fix part (14) of support in the back (4).

4. Seat (1) according to Claim 2 or 3, in which the supporting part (14) includes a lower edge (148) and a higher edge (146), and the boring (140) and pivot (12) are positioned closer to the upper edge (146) than to the lower edge (148).

5. Seat (1) According to one of the claims 1 to 4, in which the seat (1) includes first means of blocking (24), the first means of blocking being configured to hold the pivot (12) motionless from the folder (4) when the tablet (8) is in the deployed position, and the second means of blocking (30), the second means of blocking being configured to hold the tablet (8) stationary from pivot (12) when tablet (8) is in the deployed position.

6. Seat (1) According to one of the claims 1 to 5, in which the seat (1) includes pre-positioning means (34), the pre-positioning means being configured to stop the pivot (12) from the back (4) in a position in which the shelf (8) is capable of being moved to the position arranged only by translation from the pivot (12).

7. Seat (1) According to one of the claims 1 to 6, in which the support room (14) includes at least one unit (154), the support room includes at least one unit (154), which defines an opening to be closed by the tablet (8) when the tablet (8) is stowed and intended to be free of access when the tablet (8) is in the deployed position.

8. Vehicle, including a motor vehicle, including a seat (1) that is removable in accordance with one of the claims 1 to 7.
